# EUROPÄISCHE PATENTSCHRIFT

(11) **EP 3 526 080 B1**
(45) Veröffentlichungstag und Bekanntmachung des Hinweises auf die Patenterteilung: **24.06.2020**
(21) Anmeldenummer: 17758827.4
(22) Anmeldetag: 15.08.2017
(51) Int. Cl.: B60R 11/04

(54) **KAMERAMODUL**
CAMERA MODULE
MODULE CAMÉRA

(30) Priorität: 12.10.2016 DE 102016119433
(43) Veröffentlichungstag der Anmeldung: 21.08.2019
(73) Patentinhaber: Huf Hülsbeck & Fürst GmbH & Co. KG, 42551 Velbert (DE)
(72) Erfinder: WIETKAMP, Stephan, 48161 Münster (DE); SCHÜTZ, Heiko, 42549 Velbert (DE); BARTHEL, Joachim, 37194 Wahlsburg-Lippoldsberg (DE)
(86) Internationale Anmeldenummer: PCT/EP2017/070650
(87) Internationale Veröffentlichungsnummer: WO 2018/068927

(56) Entgegenhaltungen:
- DE-A1-102008 012 033
- DE-U1-202004 014 825

## Beschreibung

Die Erfindung betrifft ein Kameramodul aufweisend ein Trägerelement zur Aufnahme einer Kamera, vorzugsweise mit einer Linse, für ein Kraftfahrzeug, wobei die Kamera zwischen einer ersten Position, insbesondere Ruheposition, und einer zweiten Position, insbesondere Betriebsposition, durch einen Aktor bewegbar ausgebildet ist. Aus dem Stand der Technik ist ein Kameramodul bekannt, welches ein als Trägerelement ausgebildetes Gehäuse aufweist. Das Gehäuse dient zur Aufnahme einer Kamera mit einer Linse, welche durch einen Aktor zwischen einer Ruheposition und einer Betriebsposition bewegbar ausgebildet ist. An dem Trägerelement ist eine einzige Klappe schwenkbar angeordnet, welche bei der Bewegung der Kamera von der Ruheposition in die Betriebsposition, insbesondere durch die Linse, aufgestoßen wird. Dabei wird die Klappe jedoch nur um einen vorbestimmten Winkel verschwenkt, so dass ein Teil der Klappe in den Bereich fällt der von der Kamera bildlich erfasst wird. Dadurch wird der Außenbereich des Kraftfahrzeugs nur teilweise bildlich erfasst und führt zu einer eingeschränkten Sicht für den Benutzer. Des Weiteren kann in der Betriebsposition die Klappe zumindest teilweise das Nummernschild des Kraftfahrzeugs verdecken.

Vergleichbare Kameramodule sind ferner bekannt aus der DE 10 2008 012033 A1, die ein Kameramodul nach dem Oberbegriff des Anspruchs 1 offenbart und der DE 20 2004 014825 U1.

Daher ist die Aufgabe der Erfindung, ein Kameramodul bereitzustellen, welches den Komfort und die Sicherheit für den Benutzer verbessert.

Die Aufgabe wird gelöst durch den kennzeichnenden Teil des Patentanspruchs 1. Dabei sind mindestens eine erste Klappe und eine zweite Klappe am Kameramodul angeordnet, die gemeinsam in der ersten Position die Kamera vollständig verdecken und in der zweiten Position beabstandet zueinander angeordnet sind und einen Spalt bilden, durch welchen ein Außenbereich mittels der Kamera, insbesondere durch die Linse der Kamera, erfassbar ist.

Hier wird in vorteilhafterweise die aus dem Stand der Technik bekannte Klappe in zwei separate Klappen geteilt. Somit wird beim Aufschwenken der beiden Klappen sichergestellt, dass weder das Nummernschild verdeckt wird, noch der Sichtbereich hinter und/oder vor dem Kraftfahrzeug eingeschränkt wird. Die Länge der einzelnen Klappen ist im Vergleich zum Stand der Technik deutlich verkürzt, so dass die Kamera, insbesondere die Linse der Kamera, in der Betriebsposition vor den Klappen angeordnet ist. Ebenfalls sind die beiden Klappen derart in ihrer Länge werden kann. Erfindungsgemäß ist vorgesehen, dass mindestens eine Klappe bei der Bewegung der Kamera, insbesondere der Linse, von der ersten Position in die zweite Position durch die Kamera betätigbar ist.

Der Aktor kann bei der hier vorliegenden Erfindung als elektrischer Antrieb ausgebildet sein. Wenn wenigstens eine Klappe durch den Aktor bewegt wird, dann lässt sich Energie einsparen. Des Weiteren kann die Konstruktion vereinfacht werden, weil auf eine kinematische Verbindung zwischen dem Aktor und mindestens einer Klappe verzichtet werden kann. Die Klappen werden dann lediglich durch die Kamera, insbesondere durch die Linse aufgestoßen und müssen daher nur schwenkbar am Kameramodul gelagert werden.

Nach einer weiteren bevorzugten Ausführung des Kameramoduls kann vorgesehen sein, dass mindestens einer Klappe ein Federlement zugeordnet ist, welches die Klappe in der Position hält, in welcher die Klappe die Kamera verdeckt. Dadurch wird sichergestellt, dass beim Bewegen der Kamera von der Betriebsposition in die Ruheposition auch die Klappe selbstständig zurückschwenkt. Auch in Kombination mit einem Aktor, insbesondere mit dem elektrischen Antrieb, macht es Sinn das Federelement an mindestens eine Klappe vorzusehen, weil dann aufgrund der durch das Federelement entstehenden Federkraft weniger Energie durch den Aktor aufgebracht werden muss, um die Klappe zurück zu bewegen.

Sehr einfach kann die Konstruktion des Kameramoduls ausgebildet werden, wenn dasTrägerelement als Gehäuse für die Kamera ausgebildet ist. In diesem Fall ist die Kamera geschützt angeordnet und in der Ruheposition können die Klappen das Gehäuse verschließen, um die Kamera, insbesondere die Linse der Kamera, vor Schmutz und Feuchtigkeit zu schützen. Ebenfalls wird der Diebstahl der Kamera in vorteilhafterweise für einen Dieb erschwert.

Eine gleichförmige Bewegung der Kamera von der einen Positionen in die andere Position kann sichergestellt werden, wenn die Kamera in einer Kamerahaltevorrichtung angeordnet ist, welche durch den Aktor bewegbar ausgebildet ist. Des Weiteren dient die Kamerahaltevorrichtung zur sicheren und klapperfreien Aufnahme der Kamera, so dass die Kamera stets gute Aufnahmen des Außenbereichs durchführen kann. Die Kamerahaltevorrichtung kann auch zur Befestigung von elektrischen Komponenten verwendet werden, wie beispielsweise Kabel oder Stecker.

Sehr einfach und kostengünstig kann die Konstruktion des Kameramoduls ausgebildet sein, wenn die Klappen schwenkbar am Trägerelement, insbesondere am Gehäuse, gelagert sind.

Eine bessere bildliche Erfassung des Außenbereichs durch die Kamera kann gewährleistet werden, wenn eine Grundfläche der ersten Klappe größer als eine weitere Grundfläche der zweiten Klappe ist, wobei die erste Klappe bezüglich einer Bodenebene E oberhalb der Kamera schwenkbar gelagert ist und die zweite Klappe unterhalb der Kamera schwenkbar gelagert ist. Des Weiteren wird durch diese vorteilhafte Ausgestaltung sichergestellt, dass das Nummernschild auch bei einer ausgefahrenen zweiten Klappe stets erkennbar bleibt.

Die erste und die zweite Klappe des Kameramoduls können zusätzlich geschützt werden, wenn ein Emblem an dem Kameramodul, insbesondere am Trägerelement befestigt ist, welches mindestens durch eine Klappe und/oder durch den Aktor bewegbar ausgebildet ist. Das Emblem wird bei der Bewegung der Kamera durch diese und/oder durch die Klappen aufgestoßen, so dass auf einen zusätzlichen Antrieb zur Bewegung des Emblems verzichtet werden kann. Allerdings ist ebenfalls denkbar, dass das Emblem mit der Kinematik des Kameramoduls gekoppelt wird und mit Hilfe des Aktors bewegt wird.

Der Bereich vor dem Kraftfahrzeug kann in vorteilhafterweise bildlich erfasst werden, wenn das Trägerelement als Kühlerverkleidung ausgebildet ist.

Der Bereich hinter dem Kraftfahrzeug kann in vorteilhafterweise bildlich erfasst werden, wenn das Kameramodul, insbesondere das Trägerelement, an einer Heckklappe des Kraftfahrzeugs angeordnet ist.

Die Erfindung wird anhand eines Ausführungsbeispiels näher beschrieben.

Die Figuren zeigen:
- Figur 1: ein erfindungsgemäßes Kameramodul in einer ersten Position, insbesondere in einer Ruheposition, und
- Figur 2: das erfindungsgemäße Kameramodul in einer zweiten Position, insbesondere in einer Betriebsposition.

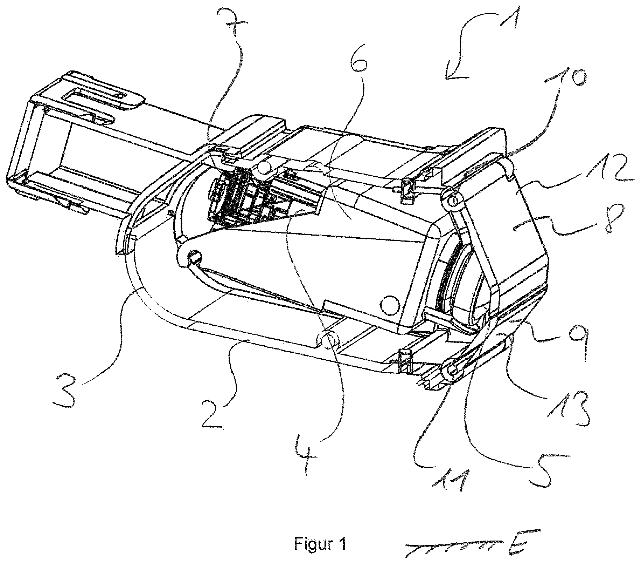

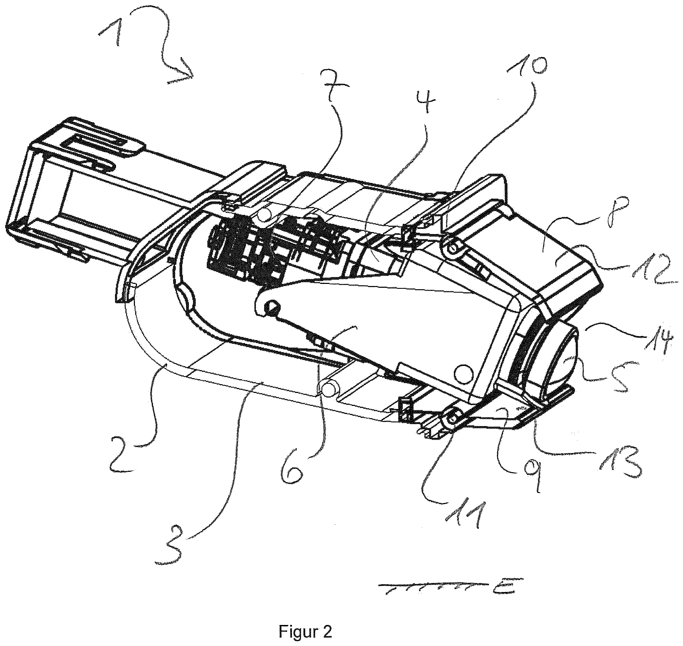

In den Figuren 1 und 2 ist ein Kameramodul 1 für ein Kraftfahrzeug offenbart. Das Kameramodul 1 weist im vorliegenden Fall ein als Gehäuse 2 ausgebildetes Trägerelement 3 auf, welches zur Aufnahme einer Kamera 4 mit einer Linse 5 dient. Zur besseren Darstellung wurde in den Figuren 1 und 2 eine Wandung des Gehäuses entfernt. Vorliegend ist das Kameramodul 1, insbesondere das Trägerelement 3, an einer Heckklappe des Kraftfahrzeugs angeordnet, um einen Außenbereich hinter dem Kraftfahrzeug bildlich zu erfassen.

Die Kamera 4 ist in einer Kamerahaltevorrichtung 6 angeordnet, welche durch einen Aktor 7 angetrieben wird. Der Aktor 7 kann als elektrischer Antrieb, insbesondere als Elektromotor, ausgebildet sein. Des Weiteren sind an dem Trägerelement 3, insbesondere an dem Gehäuse 2, eine erste Klappe 8 und eine zweite Klappe 9 jeweils schwenkbar um eine erste Achse 10 bzw. um eine zweite Achse 11 schwenkbar gelagert. Wie man gut in der Figur 1 erkennen kann, ist eine Grundfläche 12 der ersten Klappe 8 größer als eine weitere Grundfläche 13 der zweiten Klappe 9 ist, wobei die erste Klappe 8 bezüglich einer Bodenebene E oberhalb der Kamera 4 schwenkbar gelagert ist und die zweite Klappe 9 unterhalb der Kamera 4 schwenkbar gelagert ist. Dadurch wird verhindert, dass die zweite Klappe 9 in einen Bereich hineinschwenkt, in welchem sich beispielsweise ein Nummernschild befindet. Des Weiteren wird sichergestellt, dass der Außenbereich vollständig erfasst wird, weil nun ausgeschlossen ist, dass eine Klappe 8, 9 in den bildlich zu erfassenden Außenbereich hineinschwenkt.

Im vorliegenden Ausführungsbeispiel sind beide Klappen 8, 9 jeweils mit einem nicht näher gezeigten ersten bzw. zweiten Federelement verbunden, welches die Klappen 8, 9 in ihrer geschlossenen Position gemäß der Figur 1 hält. Zusätzlich ist hier eine nicht näher gezeigte Kinematik vorgesehen, welche den Aktor 7 und die erste Klappe 8 miteinander verbinden.

Nachfolgende wird die Funktionsweise des Kameramoduls näher beschrieben. Wenn sich das Kameramodul beispielsweise in der Heckklappe befindet und zur Aufnahme und Erfassung des Außenbereichs hinter dem Fahrzeug dient, dann wird beim Einlegen des Rückwärtsgangs der Aktor 7 durch eine Steuereinheit des Kraftfahrzeugs aktiviert.

In der Figur 1 befindet sich die Kamera 4 noch in einer ersten Position, insbesondere in einer Ruheposition, bei welcher die Kamera 4 geschützt in dem Gehäuse 2 angeordnet ist. Wenn der Aktor 7 nun aktiviert wird, wird die Kamerahaltevorrichtung 6 mittels des Aktors 7 bewegt. Dazu weist der Aktor 7 ein nicht näher visualisiertes Getriebe auf, welches den Aktor 7 mit der Kamerahaltevorrichtung 6 elektromechanisch verbindet. Während der Bewegung wird die Kamera 4, insbesondere die Linse 5, in Richtung der beiden Klappen 8, 9 bewegt. Da die erste Klappe 8 mittels der Kinematik, insbesondere mittels einer Vier-Gelenk-Kinematik, mit dem Aktor 7 mechanisch verbunden ist, wird mit der Bewegung der Kamera 4 gleichzeitig auch die erste Klappe 8 bewegt und entgegen der durch das erste Federlement wirkenden Federkraft geöffnet. Die zweite Klappe 9 wird ebenfalls geöffnet entgegen der durch das zweite Federlement wirkenden Federkraft, und zwar durch ein Anstoßen der Kamera 4, insbesondere der Linse 5, an die zweite Klappe 9. Nachdem die Klappen 8, 9 geöffnet worden sind, befindet sich die Kamera 4 in der zweiten Position, insbesondere in einer Betriebsposition, in welcher die Klappen 8, 9 beabstandet zueinander angeordnet sind und einen Spalt 14 bilden, durch welchen der Außenbereich mittels der Kamera 4, insbesondere durch die Linse 5 der Kamera 4, bildlich erfassbar ist. Die Bilder oder Videosequenzen werden auf einem Bildschirm innerhalb des Kraftfahrzeugs und/oder auf einem Bildschirm eines Smartphones visualisiert.

Wenn der Benutzer den Rückwärtsgang wieder herausnimmt, wird die Kamera 4 durch den Aktor 4 wieder zurück in die Ruheposition bewegt. Dabei wird die erste Klappe 8 durch den Aktor 7 geschlossen und die zweite Klappe 9 wird durch das zweite Federlement wieder zurück in die geschlossene Stellung bewegt. In der Ruheposition verdecken dann wieder die erste Klappe 8 und die zweite Klappe 9 die Kamera 8 vollständig, um die Kamera 4 vor Feuchtigkeit und Schmutz zu schützen, sowie um die Diebstahlsicherheit zu erhöhen.

Es ist denkbar, dass man zusätzlich ein Emblem an dem Kameramodul 1, insbesondere am Trägerelement 3 befestigt, welches mindestens durch eine Klappe 8, 9 und/oder durch den Aktor 7 bewegbar ausgebildet ist. Ebenfalls ist es möglich, dass die erste Klappe 8 und/oder die zweite Klappe 9 mit einem Dichtelement versehen sind, um die Linse 5 vor Verschmutzungen und Feuchtigkeit zu schützen, wenn sich die Kamera in der Ruheposition befindet. Weiter kann alternativ das Trägerelement 3 auch als Kühlerverkleidung ausgebildet sein.

### Bezugszeichenliste

- 1: Kameramodul
- 2: Gehäuse
- 3: Trägerelement
- 4: Kamera
- 5: Linse
- 6: Kamerahaltevorrichtung
- 7: Aktor
- 8: erste Klappe
- 9: zweite Klappe
- 10: erste Achse
- 11: zweite Achse
- 12: Grundfläche
- 13: weitere Grundfläche
- 14: Spalt

## Patentansprüche

1. Kameramodul (1) aufweisend ein Trägerelement (3) zur Aufnahme einer Kamera (4), vorzugsweise mit einer Linse (5), für ein Kraftfahrzeug, wobei die Kamera (4) zwischen einer ersten Position, insbesondere Ruheposition, und einer zweiten Position, insbesondere Betriebsposition, durch einen Aktor (7) bewegbar ausgebildet ist, wobei
mindestens eine erste Klappe (8) und eine zweite Klappe (9) am Kameramodul (1) angeordnet sind, die gemeinsam in der ersten Position die Kamera (4) vollständig verdecken und in der zweiten Position beabstandet zueinander angeordnet sind und einen Spalt (14) bilden, durch welchen ein Außenbereich mittels der Kamera (4), insbesondere durch die Linse (5) der Kamera (4), erfassbar ist, **dadurch gekennzeichnet, dass** mindestens eine Klappe (8, 9) bei der Bewegung der Kamera (4), insbesondere der Linse (5), von der ersten Position in die zweite Position durch die Kamera (4) betätigbar ist.

2. Kameramodul (1) nach Anspruch 1, **dadurch gekennzeichnet, dass** die erste Klappe (8) und/oder die zweite Klappe (9) mit einem Dichtelement versehen sind.

3. Kameramodul (1) nach Anspruch 1 oder 2, **dadurch gekennzeichnet, dass** eine Kinematik vorgesehen ist, welche den Aktor (7) und mindestens eine Klappe (8, 9) mechanisch verbindet.

4. Kameramodul (1) nach mindestens einem der vorhergehenden Ansprüche, **dadurch gekennzeichnet, dass** mindestens einer Klappe (8, 9) ein Federlement zugeordnet ist, welches die Klappe (8, 9) in der Position hält, in welcher die Klappe (8, 9) die Kamera (4) verdeckt.

5. Kameramodul (1) nach mindestens einem der vorhergehenden Ansprüche, **dadurch gekennzeichnet, dass** dasTrägerelement (3) als Gehäuse (2) für die Kamera (4) ausgebildet ist.

6. Kameramodul (1) nach mindestens einem der vorhergehenden Ansprüche, **dadurch gekennzeichnet, dass** die Kamera (4) in einer Kamerahaltevorrichtung (6) angeordnet ist, welche durch den Aktor (7) bewegbar ausgebildet ist.

7. Kameramodul (1) nach mindestens einem der vorhergehenden Ansprüche, **dadurch gekennzeichnet, dass** die Klappen (8, 9) schwenkbar am Trägerelement (3), insbesondere am Gehäuse (2), gelagert sind.

8. Kameramodul (1) nach mindestens einem der vorhergehenden Ansprüche, **dadurch gekennzeichnet, dass** eine Grundfläche (12) der ersten Klappe (8) größer als eine weitere Grundfläche (13) der zweiten Klappe (9) ist, wobei die erste Klappe (8) bezüglich einer Bodenebene E oberhalb der Kamera (4) schwenkbar gelagert ist und die zweite Klappe (9) unterhalb der Kamera (4) schwenkbar gelagert ist.

9. Kameramodul (1) nach mindestens einem der vorhergehenden Ansprüche, **dadurch gekennzeichnet, dass** ein Emblem an dem Kameramodul (1), insbesondere am Trägerelement (3) befestigt ist, welches mindestens durch eine Klappe (8, 9) und/oder durch den Aktor (7) bewegbar ausgebildet ist.

10. Kameramodul (1) nach mindestens einem der vorhergehenden Ansprüche, **dadurch gekennzeichnet, dass** das Trägerelement (3) als Kühlerverkleidung ausgebildet ist.

11. Kameramodul (1) nach mindestens einem der vorhergehenden Ansprüche, **dadurch gekennzeichnet, dass** das Kameramodul (1), insbesondere das Trägerelement (3), an einer Heckklappe des Kraftfahrzeugs angeordnet ist.

## Claims

1. A camera module (1) having a carrier element (3) for receiving a camera (4), preferably having a lens (5), for a motor vehicle, wherein the camera (4) is designed to be movable between a first position, in particular a rest position, and a second position, in particular an operating position, by an actuator (7), wherein
at least one first flap (8) and a second flap (9) are arranged on the camera module (1), which jointly completely conceal the camera (4) in the first position and are arranged at a distance from each other in the second position, forming a gap (14) through which an outer region can be detected by means of the camera (4), in particular by the lens (5) of the camera (4), **characterized in that** at least one flap (8, 9) is operable by the camera (4) when the camera (4), in particular the lens (5), is moved from the first position into the second position.

2. The camera module (1) according to Claim 1, **characterized in that** the first flap (8) and/or the second flap (9) are equipped with a sealing element.

3. The camera module (1) according to Claim 1 or 2, **characterized in that** a kinematics arrangement is provided which mechanically connects the actuator (7) and at least one flap (8, 9).

4. The camera module (1) according to at least one of the preceding claims, **characterized in that** a spring element is attached to at least one flap (8, 9), which element holds the flap (8, 9) in the position in which the flap (8, 9) covers the camera (4).

5. The camera module (1) according to at least one of the preceding claims, **characterized in that** the carrier element (3) is designed as the housing (2) for the camera (4).

6. The camera module (1) according to at least one of the preceding claims, **characterized in that** the camera (4) is arranged in a camera holding device (6) which is designed to be movable by the actuator (7).

7. The camera module (1) according to at least one of the preceding claims, **characterized in that** the flaps (8, 9) are mounted pivotably on the carrier element (3), in particular on the housing (2).

8. The camera module (1) according to at least one of the preceding claims, **characterized in that** a basic area (12) of the first flap (8) is larger than a further basic area (13) of the second flap (9), wherein the first flap (8) is mounted above the camera (4) pivotably with respect to a ground plane E, and the second flap (9) is mounted pivotably below the camera (4).

9. The camera module (1) according to at least one of the preceding claims, **characterized in that** a badge is secured to the camera module (1), in particular to the carrier element (3), which badge is designed to be movable by a flap (8, 9) and/or by the actuator (7).

10. The camera module (1) according to at least one of the preceding claims, **characterized in that** the carrier element (3) is embodied as a radiator cowling.

11. The camera module (1) according to at least one of the preceding claims, **characterized in that** the camera module (1), in particular the carrier element (3) is arranged on a tailgate of the motor vehicle.

## Revendications

1. Module de caméra (1) comportant un élément de support (3) pour loger une caméra (4), de préférence avec une lentille (5), pour un véhicule automobile, sachant que la caméra (4) est constituée pouvant être mobile par un actionneur (7) entre une première position, en particulier une position de repos, et une deuxième position, en particulier une position de fonctionnement, sachant
qu'au moins un premier volet (8) et un deuxième volet (9) sont disposés sur le module de caméra (1), qui recouvrent complètement en commun la caméra (4) dans la première position et sont disposés à distance l'un de l'autre dans la deuxième position et forment un interstice (14) à travers lequel une zone extérieure peut être saisie au moyen de la caméra (4), en particulier par la lentille (5) de la caméra (4), **caractérisé en ce qu'**au moins un volet (8, 9) peut être actionné par la caméra (4) lors du mouvement de la caméra (4), en particulier de la lentille (5), de la première position dans la deuxième position.

2. Module de caméra (1) selon la revendication 1, **caractérisé en ce que** le premier volet (8) et/ou le deuxième volet (9) sont dotés d'un élément hermétique.

3. Module de caméra (1) selon la revendication 1 ou 2, **caractérisé en ce qu'**un système cinématique est prévu, lequel relie mécaniquement l'actionneur (7) et au moins un volet (8, 9).

4. Module de caméra (1) selon au moins l'une quelconque des revendications précédentes, **caractérisé en ce qu'**au moins un élément à ressort est attribué à un volet (8, 9), lequel maintient le volet (8, 9) dans la position dans laquelle le volet (8, 9) recouvre la caméra (4).

5. Module de caméra (1) selon au moins l'une quelconque des revendications précédentes, **caractérisé en ce que** l'élément de support (3) est constitué sous la forme d'un boîtier (2) pour la caméra (4).

6. Module de caméra (1) selon au moins l'une quelconque des revendications précédentes, **caractérisé en ce que** la caméra (4) est disposée dans un dispositif de support de caméra (6), lequel est constitué pouvant être mobile par l'actionneur (7).

7. Module de caméra (1) selon au moins l'une quelconque des revendications précédentes, **caractérisé en ce que** les volets (8, 9) sont logés pouvant pivoter sur l'élément de support (3), en particulier sur le boîtier (2).

8. Module de caméra (1) selon au moins l'une quelconque des revendications précédentes, **caractérisé en ce qu'**une surface de base (12) du premier volet (8) est plus grande qu'une autre surface de base (13) du deuxième volet (9), sachant que le premier volet (8) est logé pouvant pivoter par rapport à un plan de fond E au-dessus de la caméra (4) et le deuxième volet (9) est logé pouvant pivoter en dessous de la caméra (4).

9. Module de caméra (1) selon au moins l'une quelconque des revendications précédentes, **caractérisé en ce qu'**un emblème est fixé sur le module de caméra (1), en particulier sur l'élément de support (3), lequel est constitué pouvant être déplacé au moins par un volet (8, 9) et/ou par l'actionneur (7).

10. Module de caméra (1) selon au moins l'une quelconque des revendications précédentes, **caractérisé en ce que** l'élément de support (3), est constitué sous la forme d'un revêtement de radiateur.

11. Module de caméra (1) selon au moins l'une quelconque des revendications précédentes, **caractérisé en ce que** le module de caméra (1), en particulier l'élément de support (3), est disposé sur un hayon arrière du véhicule automobile.
